# EUROPEAN PATENT SPECIFICATION

(11) **EP 0 478 285 B1**
(45) Date of publication and mention of the grant of the patent: **28.02.1996**
(21) Application number: 91308705.2
(22) Date of filing: 25.09.1991
(51) Int. Cl.: G01N 35/02, G01N 35/04

(54) **Sampler for analyzing samples**
Vorrichtung zur Analyse von Proben
Dispositif pour l'analyse d'échantillons

(30) Priority: 25.09.1990 JP 254692/90
(43) Date of publication of application: 01.04.1992
(73) Proprietor: TOA MEDICAL ELECTRONICS CO., LTD., Chuoku, Kobe (JP)
(72) Inventor: Kanamori, Shigeo, Mikishi, Hyogoken (JP)
(74) Representative: Price, Paul Anthony King

(56) References cited:
- EP-A- 0 314 525
- GB-A- 2 009 401
- JP-U-63 141 458
- PATENT ABSTRACTS OF JAPAN vol. 014, no. 245 (P-1052)24 May 1990, & JP-A-2 064 463 (HITACHI LTD.) 5 March 1990
- PATENT ABSTRACTS OF JAPAN vol. 013, no. 009 (P-811)11 January 1989 & JP-A-63 217 273 (TOA MEDICAL ELECTRONICS CO) 9 September 1988

## Description

The invention relates to a sampler for transporting sample racks to analyzing apparatus such as a blood analyzer and a smeared sample generator.

Feeding devices for sequentially feeding blood or other samples to analyzers by conveying sample racks are already known (see, for example, Japanese Laid-open Utility Models Sho. 63-141456 and Sho. 63-141458).

In the conventional sample rack feeding devices, only about 20 sample racks can be held at one time in the input area (i.e. about 200 samples if there are 10 samples in each rack). The capacity is the same in the output area.

Accordingly, when it is desired to process samples continuously, further sample racks must be added when the input area is just about to empty. When the output area has filled up with sample racks, they must be taken out. This is labor intensive. When the output area is full up with sample racks, further sample racks cannot be accepted, and the conveying system stops.

It is, however, not a simple matter of increasing capacity by widening the input and output areas. This is because the number of necessary racks is different for each installation. One installation may require 60 racks, and others may need only 20 (or, in the future, 40 racks or 60 racks may be necessary as the number of samples increases).

Conventionally, when preparing input and output areas of differing capacities, they were arranged to have the particular capacities required. As a result, the cost was very high because they were made on an individual basis.

Also, if either the input area or the output area breaks down, the supply system stops and no further samples can be analyzed.

In addition, when connecting analyzers having different processing speeds, the overall analysis must be done at the slowest processing speed of the analyzers.

U.S. Patent No. 2,897,772 discloses apparatus for making and conveying doughnuts. There are two storage areas which are connected in series. Each storage area has a fixed capacity and comprises two endless chain loops which feed the doughnuts from a first chain loop to a second chain loop.

According to the present invention, there is provided a sampler for presenting samples to one or more analyzers, the sampler comprising an input area and an output area, each area being formed from a plurality of rack conveying/storage units, wherein each rack unit comprises: a loader for receiving sample racks; an accumulator for accumulating sample racks received by the loader; an unloader for expelling sample racks received from the accumulator; first moving means for moving sample racks from the loader to the accumulator; second moving means for moving sample racks from the accumulator to the unloader; and third moving means for expelling sample racks from the unloader; wherein, for each area, the rack units are serially connected and each adjacent pair of rack units are arranged so that the loader of the downstream rack unit communicates with the unloader of the upstream rack unit; and wherein the rack units are modules which (i) permit the input and output areas to be increased in size by adding additional such rack units and (ii) permit the interchanging of rack units within and/or between the input and output areas.

Preferably, the sampler further comprises a buffer area located along conveyor means which connect the input area to the output area, the buffer area being formed from at least one rack unit of the type above.

Preferably, the buffer area comprises a plurality of units and the loader of the most upstream rack unit communicates with an upstream conveyor of the conveyor means and an unloader of the most downstream rack unit communicates with a downstream conveyor of the conveyor means.

Preferably, a wall of the unloader of each rack unit includes a sensor for detecting a sample rack and push-back means for biasing the sample rack away from the unloader wall to make it more difficult for the sample rack to activate the sensor.

The invention will now be described by way of non-limiting embodiments with reference to the accompanying drawings, in which:-
Fig. 1 is a plan view showing an embodiment of a sampler in accordance with the invention;
Fig. 2 and Fig. 3 are plan views showing an embodiment of a rack conveying/storage unit, in which Fig. 2 and Fig. 3 show different versions of the unit having mirror image conveyor paths;
Fig. 4 is a detailed plan view of an unloader of the rack unit shown in Fig. 2;
Fig. 5 and Fig. 6 are plan views explaining the benefit of installing push-back means, in which Fig. 5 shows a rack unit without push-back means, and Fig. 6 shows a rack unit with push-back means;
Fig. 7 is a plan view showing another embodiment of a sampler in accordance with the invention; and
Fig. 8 is a plan view showing a further embodiment of a sampler in accordance with the invention.

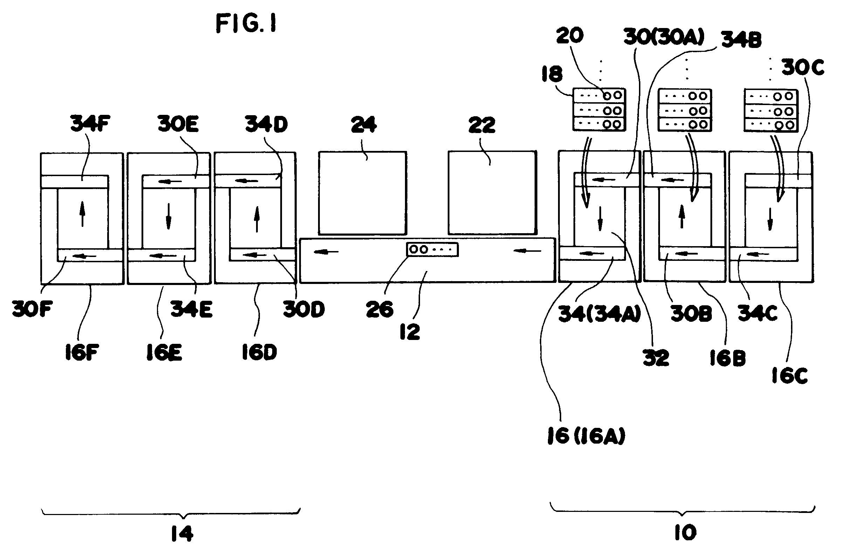

As shown in Fig. 1, a sampler in accordance with the invention comprises a rack input area 10, a conveyor 12, and a rack output area 14. A sample rack 18 holds a plurality of sample containers 20. A plurality of sample racks 18 are located in the rack input area 10. The sample racks 18 are added to the conveyor one by one, and are presented to blood analyzers 22, 24. At the blood analyzers 22, 24, each sample rack 26 is conveyed intermittently and a sample of each specimen is taken. After sampling, the sample racks are fed to the rack output area 14.

Rack conveying/storage units 16 are used in the rack input area 10 and the rack output area 14. Each rack conveying/storage unit 16 receives sample racks from outside itself, and outputs the sample racks to outside itself. Each unit has a loader 30 which is a portion for receiving sample racks along the longitudinal direction of the sampler. Each unit also has an unloader 34 which is a portion for outputting sample racks along the longitudinal direction of the sampler. Between the loader 30 and the unloader 34, there is an accumulator 32 in which plural sample racks may be arranged in plural rows.

In Fig. 1, three rack units 16A, 16B, 16C are used in the rack input area 10. An unloader 34A of the first rack unit 16A communicates with the conveyor 12, and its loader 30A communicates with the unloader 34B of the second rack unit 16B. The loader 30B of the second rack unit 16B communicates with the unloader 34C of the third rack unit 16C. Similarly, three rack units 16D, 16E, 16F are used in the rack output area 14. A loader 30D of the fourth unit 16D communicates with the conveyor 12, and its unloader 34D communicates with the loader 30E of the fifth rack unit 16E. The unloader 34E of the fifth rack unit 16E communicates with the loader 30F of the sixth rack unit 16F.

Supposing 20 sample racks can be stored on the accumulator of each rack unit, then a total of 60 sample racks can be stored at any one time with this embodiment.

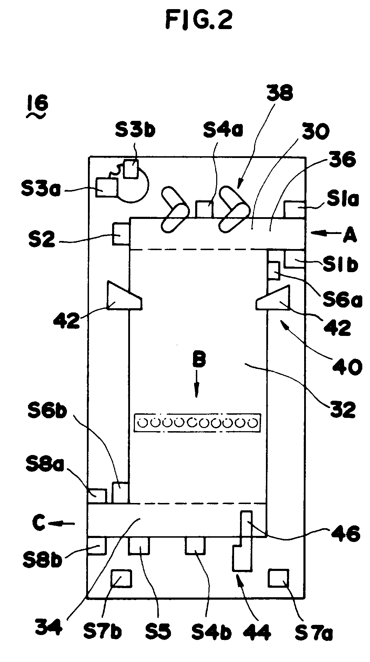

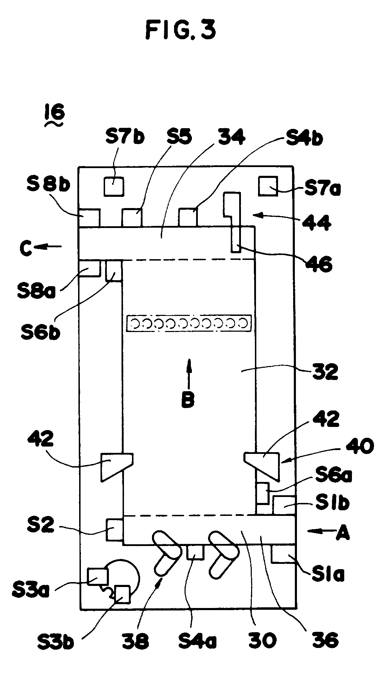

Fig. 2 and Fig. 3 are schematic plan views of the rack units 16. Their compositions and functions are the same, but their configurations and directions of travel of the sample racks are different. Fig. 2 shows the first, third and fifth rack units 16A, 16C, 16E, while Fig. 3 shows the second, fourth and sixth rack units 16B, 16D, 16F.

The operation of a rack unit is explained below. In the first place, sample racks are presented to the loader 30 along the direction of arrow A. Sensors S1a, S1b detect the arrival of the sample racks.

Next, the belt of the loader 30 rotates, and the sample racks are drawn into the loader 30. The sensor S2 detects when each sample rack has been fully drawn into the loader 30.

The loaded rack is pushed onto the accumulator 32 by first moving means 38. The moving range of the first moving means is determined by sensors S3a, S3b. Whether or not a sample rack is present in the accumulator 32 is detected by sensors S4a, S4b.

The sample rack pushed onto the accumulator 32 is moved in the direction of arrow B by second moving means 40 comprising arms which push the sample rack. The moving range of the arms 42 is determined by sensors S6a, S6b.

When a sample rack in the accumulator 32 reaches the unloader 34, it is detected by the sensor S5.

Then, third moving means 44 operates, and the sample rack in the unloader 34 is pushed by an arm 46 to move in the direction of arrow C. The moving range of the arm 46 is determined by sensors S7a, S7b. As the sample rack leaves the unloader 34, its departure is detected by sensors S8a, S8b.

Each pair of sensors S1a and S1b, S4a and S4b, and S8a and S8b comprises respectively a light transmitter and a light receiver type sensor. The sensors S2, S5, S6a, S7a, S7b are microswitches, and the sensors S3a, S3b, S6b are photo interruptors.

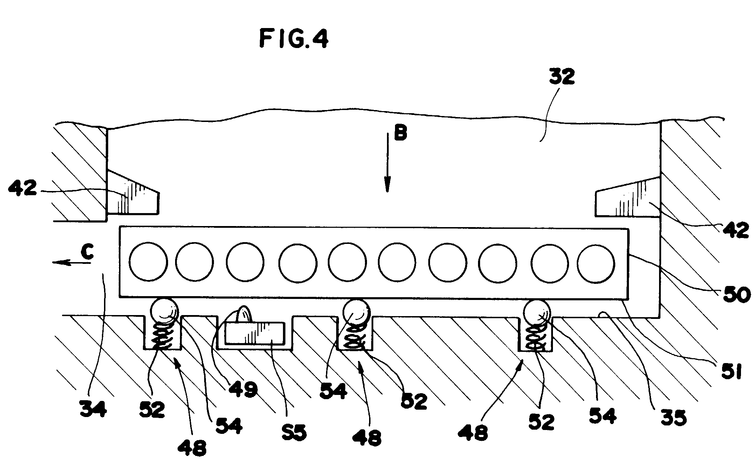

Fig. 4 is a plan view of the unloader 34 for use in explaining the operation of the sensor S5. The sensor S5 and push-back means 48 for pushing back the sample rack are attached to an unloader wall 35. The arms 42 of the second:moving means push the front face 51 of the sample rack 50 towards the unloader wall 35 in the direction of arrow B. As spring 52 of the push-back means 48 are compressed, the front face 51 comes into firm contact with the unloader wall 35 and pushes an actuator 49 of the sensor S5 to turn on the sensor S5.

When the arms 42 of the second moving means return to their home positions, the springs 52 of the push-back means 48 are restored, and the sample rack is pushed back by a specific distance (1 to 2 mm), and the sensor S5 is turned off. Numerals 54 are ball-shaped members.

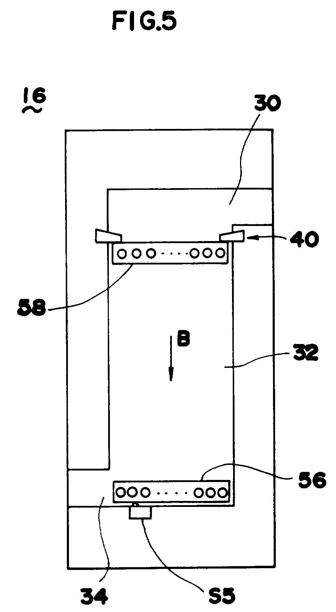

The purpose of locating the push-back means 48 by the sensor S5 will now be explained with reference to Fig. 5. In the absence of a sample rack, the sensor S5 is turned off. When a first sample rack 56 is pushed onto the accumulator 32, the second moving means 40 operates until the sensor S5 is turned on (that is, until the sample rack 56 reaches the unloader 34). Next, a second sample rack 58 is pushed onto the accumulator 32. However, since the sensor S5 remains in the ON state, the second moving means 40 does not operate. That is, the sample rack 56 in the unloader and the sample rack 58 newly pushed onto the accumulator 32 are not brought into mutual contact.

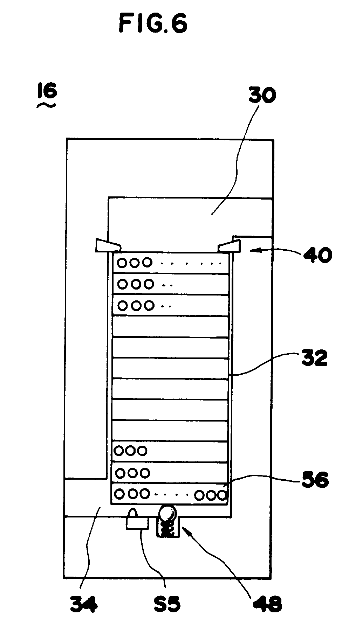

However, by using the push-back means 48 as shown in Fig. 4, even if the sample rack is present in the unloader 34, the sensor S5 does not remain turned on (see Fig. 6), so that the second moving means 40 operates, thereby bringing the sample racks into mutual contact. When the sample racks come into contact with each other and the sensor S5 is turned on, the second moving means 40 returns to its original position.

Thus, if the sample rack is not expelled from the unloader 34, new sample racks can be taken in until the accumulator 32 is full up with sample racks.

The first moving means 38 and the second moving means 40 may be known ones as disclosed, for example, in Japanese Laid-open Utility Models Sho. 63-141456 and Sho. 63-141458. The third moving means 44 may also be realized by using known technology.

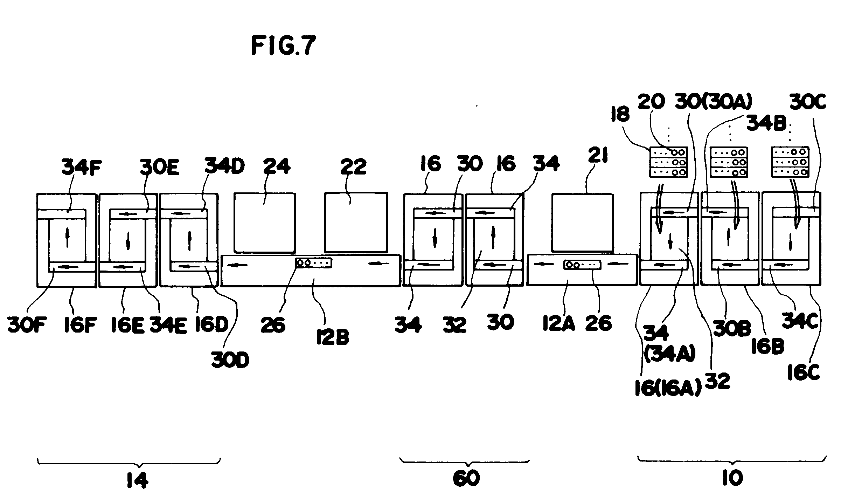

Fig. 7 shows a different embodiment of the invention. In this embodiment, between the conveyor 12A and conveyor 12B, there is installed a buffer area (rack pooler) 60 comprising one or more rack units 16. The buffer area 60 stores a buffer supply of racks and makes it possible to convey the racks without having to cause the high speed analyzer to wait when using analyzers 21, 22, 24 which differ in processing speed.

The sampler in accordance with this embodiment comprises a rack input area 10, conveyors 12A, 12B, a buffer area 60, and a rack output area 14. A sample rack 18 holds a plurality of sample containers 20. A plurality of sample racks 18 are added to the rack input area 10. The sample racks 18 are fed onto the conveyor 12A one by one, and are presented to a blood analyzer 21. At the analyzer 21, each sample rack 26 is conveyed intermittently and a sample of each specimen is taken. After sampling, the sample racks are fed to the buffer area 60.

In this embodiment, the buffer area 60 comprises a plurality (two in the example in Fig. 7) of rack units 16. The loader 30 of the upstream rack unit and the upstream conveyor 12A communicate with each other. The unloader 34 of the downstream rack unit and the downstream conveyor 12B communicate with each other. The loader 30 of the downstream rack unit and the unloader 34 of the upstream unit communicate with each other, thus connecting the rack units in series.

Three or more rack units may be required for the buffer area 60. The exact number of units is determined by the amount of buffering that is needed.

From the buffer area 60, the racks are fed onto the conveyor 12B, and are presented to the blood analyzers 22, 24. At the analyzers 22, 24, each sample rack 26 is conveyed intermittently and a sample of each specimen is taken. After sampling, the racks are fed to the rack output area 14.

In this embodiment, if the processing speed of the upstream analyzer 21 is fast and that of the the downstream analyzers 22, 24 is slow, the difference in processing speed can be compensated for. That is, the high speed analyzer can process at high speed regardless of the processing capacity of the low speed analyzers.

Also, if some trouble occurs with the upstream analyzer 21 and causes it to stop temporarily, it is not necessary to stop the entire system. In this case, the buffer area 60 functions as the rack input area, so that processing may be done by the downstream analyzers 22, 24.

If the downstream analyzer 22 or/and 24 should stop, the buffer area 60 may function as the rack output area, so that processing may be continued by the upstream analyzer 21.

This explanation refers to the case of three analyzers, but the same holds true if two or four or more analyzers are used.

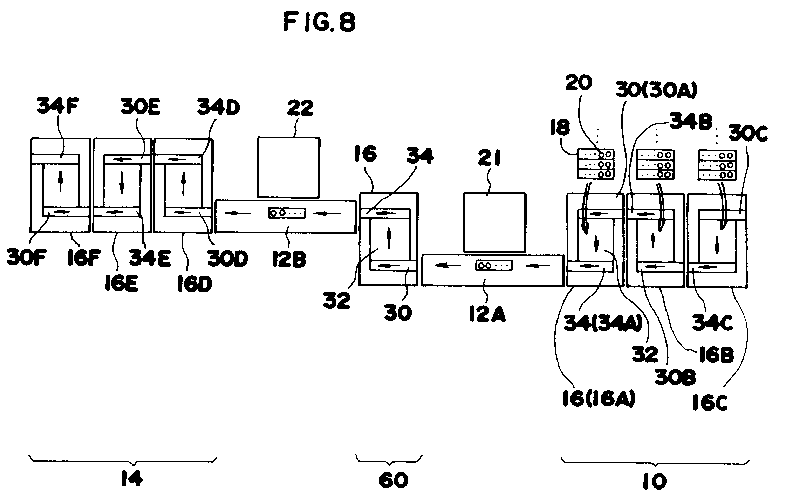

Fig. 8 shows a further embodiment of the invention. In this embodiment, the buffer area 60 comprises one rack unit 16. The loader 30 of the rack unit 16 and the upstream conveyor 12A communicate with each other, and its unloader 34 and the downstream conveyor 12B also communicate with each other.

The above described embodiments of the invention have the following characteristics.
(1) Because the rack input area and rack output area are formed by connecting a plurality of rack conveying/storage units in series, they may easily be given different capacities by varying the number of units used. It is also easy to extend the input and output areas. Moreover, the manufacturing cost is low.
(2) If any one of the rack units becomes defective, another rack unit can act as a substitute, so that system shutdown is avoided.
(3) When the rack sensor and push-back means are attached to the wall of the unloader, the first sample rack is not expelled from the unloader and further sample racks can be accepted until the accumulator is full up with sample racks.
(4) When a buffer area comprising at least one rack unit is installed between conveyors, a plurality of sample racks may be temporarily stored. Thus, when using analyzers having different processing speeds, the high speed analyzer can process at high speed regardless of the processing capacity of the low speed analyzers, by virtue of the buffer store of racks. If the upstream analyzer is stopped, the buffer area functions as the rack input area so that processing may still be done by the downstream analyzer. Likewise, if the downstream analyzer is stopped, the buffer area functions as the rack output area, and processing may still be done by the upstream analyzer.

Having described preferred embodiments of the invention with reference to the accompanying drawings, it is to be understood that the invention is not limited to those precise embodiments, and that various changes and modifications may be effected therein by one skilled in the art without departing from the invention.

## Claims

1. A sampler for presenting samples (20) to one or more analyzers (21, 22, 24), the sampler comprising an input area (10) and an output area (14), each area (10, 14) being formed from a plurality of rack conveying/storage units (16), wherein each rack unit (16) comprises:
a loader (30) for receiving sample racks (18);
an accumulator (32) for accumulating sample racks received by the loader (30);
an unloader (34) for expelling sample racks received from the accumulator (32);
first moving means (38) for moving sample racks from the loader (30) to the accumulator (32);
second moving means (40) for moving sample racks from the accumulator (32) to the unloader (34); and
third moving means (44) for expelling sample racks from the unloader (34);
wherein, for each area (10, 14), the rack units are serially connected and each adjacent pair of rack units are arranged so that the loader (30) of the downstream rack unit communicates with the unloader (34) of the upstream rack unit; and
wherein the rack units (16) are modules which (i) permit the input and output areas to be increased in size by adding additional such rack units (16) and (ii) permit the interchanging of rack units within and/or between the input and output areas.

2. A sampler according to claim 1, further comprising a buffer area (60) located along conveyor means (12A, 12B) which connect the input area (10) to the output area (14), the buffer area (60) being formed from at least one rack unit (16) of the type recited in claim 1.

3. A sampler according to claim 2, wherein the buffer area (60) comprises a plurality of units (16) and the loader (30) of the most upstream rack unit communicates with an upstream conveyor (12A) of the conveyor means (12A, 12B) and an unloader (34) of the most downstream rack unit communicates with a downstream conveyor (12B) of the conveyor means (12A, 12B).

4. A sampler according to any of claims 1 to 3, wherein a wall (35) of the unloader (34) of each rack unit (16) includes a sensor (S5) for detecting a sample rack (56 in Fig. 6) and push-back means (48) for biasing the sample rack (56) away from the unloader wall (35) to make it more difficult for the sample rack to activate the sensor.

## Patentansprüche

1. Probennahmevorrichtung für die Bereitstellung von Proben (20) für einen oder mehrere Analysatoren (21, 22, 24), wobei die Probennahmevorrichtung einen Eingangsbereich (10) und einen Ausgangsbereich (14) aufweist, wobei jeder Bereich (10, 14) aus einer Mehrzahl von Gestelltransport/Speichereinheiten (16) gebildet wird, wobei jede Gestelleinheit (16) aufweist:
eine Beladevorrichtung (30) für die Aufnahme von Probengestellen (18),
einen Sammler (32), für das Sammeln von Probengestellen, die von der Beladevorrichtung (30) aufgenommen werden,
eine Entladevorrichtung (34), um von dem Sammler (32) aufgenommene Probengestelle auszustoßen,
erste Bewegungseinrichtungen (38), um Probengestelle von der Beladevorrichtung (30) zu dem Sammler (32) zu bewegen,
zweite Bewegungseinrichtungen (40), um die Probengestelle von dem Sammler (32) zu der Entladevorrichtung (34) zu bewegen, und
dritte Bewegungseinrichtungen (44), um die Probengestelle aus der Entladevorrichtung (34) auszustoßen,
wobei für jeden der Bereiche (10, 14) die Gestelleinheiten in einer Reihe miteinander verbunden sind und jedes benachbarte Paar von Gestelleinheiten so angeordnet ist, daß die Beladevorrichtung (30) für die stromabseitig gelegene Gestelleinheit mit der Entladevorrichtung (34) der stromaufwärtigen Gestelleinheit in Verbindung steht, und
wobei die Gestelleinheiten (16) Module sind, die (i) es ermöglichen, daß die Größe der Eingangs- und Ausgangsbereiche durch Hinzufügung zusätzlicher derartiger Gestelleinheiten (16) vergrößert wird und (ii) das Auswechseln von Gestelleinheiten innerhalb der Eingangs- und Ausgangsbereiche oder zwischen diesen erlauben.

2. Probennahmevorrichtung nach Anspruch 1, welche weiterhin einen Pufferbereich (60) aufweist, der entlang von Transporteinrichtungen (12A, 12B) angeordnet ist, welche den Eingangsbereich (10) mit dem Ausgangsbereich (14) verbinden, wobei der Pufferbereich (60) von zumindest einer Gestelleinheit (16) der in Anspruch 1 dargestellten Art gebildet wird.

3. Probennahmevorrichtung nach Anspruch 2, wobei der Pufferbereich (60) eine Mehrzahl von Einheiten (16) aufweist und die Beladevorrichtung (30) der am weitesten oben liegenden Gestelleinheit mit einem stromaufwärtigen Förderer (12A) zu den Fördereinrichtungen (12A, 12B) in Verbindung steht und wobei eine Entladevorrichtung (34) der am weitesten stromab gelegenen Gestelleinheit mit einem stromabwärtigen Förderer (12B) der Transporteinrichtung (12A, 12B) in Verbindung steht.

4. Probennahmevorrichtung nach einem der Ansprüche 1 bis 3, wobei eine Wand (35) der Entladevorrichtung (34) jeder Gestelleinheit (16) einen Sensor (S5)für das Erfassen eines Probengestells (56 in Figur 6) und Mittel (48) zum Zurückstoßen aufweist, um das Probengestell (56) weg von der Wand (35) der Entladevorrichtung vorzuspannen, um es dem Probengestell zu erschweren, den Sensor zu aktivieren.

## Revendications

1. Appareil d'alimentation en échantillons destiné à présenter des échantillons (20) à un ou plusieurs analyseurs (21, 22, 24), l'appareil d'alimentation en échantillons comprenant une zone d'entrée (10) et une zone de sortie (14), chaque zone (10, 14) étant formée de plusieurs unités de transfert/stockage de portoirs, dans lesquelles chaque unité de portoirs (16) comprend:
un dispositif de chargement (30) destiné à recevoir des portoirs d'échantillons (18);
un magasin (32) destiné à stocker des portoirs d'échantillons reçus par le dispositif de chargement (30);
un dispositif de retrait (34) destiné à retirer des portoirs d'échantillons provenant du magasin (32);
un premier moyen de déplacement (38) destiné à déplacer des portoirs d'échantillons du dispositif de chargement (30) vers le magasin (32);
un second moyen de déplacement (40) destiné à déplacer des portoirs d'échantillons du magasin (32) vers le dispositif de retrait (34); et
un troisième moyen de déplacement (44) destiné à retirer des portoirs d'échantillons du dispositif de retrait (34);
où, pour chaque zone (10, 14), les unités de portoirs sont raccordées en série et chaque paire adjacente d'unités de portoirs est disposée de telle sorte que le dispositif de chargement (30) de l'unité de portoirs en aval communique avec le dispositif de retrait (34) de l'unité de portoirs en amont; et
où les unités de portoirs (16) sont des modules qui (i) permettent l'augmentation de la taille des zones d'entrée et de sortie en ajoutant des unités de portoirs similaires supplémentaires (16) et qui (ii) permettent l'échange d'unités de portoirs à l'intérieur de et/ou entre les zones d'entrée et de sortie.

2. Appareil d'alimentation en échantillons selon la revendication 1, comprenant en outre une zone intermédiaire de régulation (60) placée dans le prolongement du moyen de transfert (12A, 12B) qui raccorde la zone d'entrée (10) à la zone de sortie (14), la zone intermédiaire de régulation (60) étant formée d'au moins une unité de portoirs (16) du type exposé dans la revendication 1.

3. Appareil d'alimentation en échantillons selon la revendication 2, où la zone intermédiaire de régulation (60) comprend plusieurs unités (16) et où le dispositif de chargement (30) de l'unité de portoirs la plus en amont communique avec un dispositif de transfert en amont (12A) du moyen de transfert (12A, 12B) et où un dispositif de retrait (34) de l'unité de portoirs la plus en aval communique avec un dispositif de transfert (12B) du moyen de transfert (12A, 12B).

4. Appareil d'alimentation en échantillons selon l'une quelconque des revendications 1 à 3, où une paroi (35) du dispositif de retrait (34) de chaque unité de portoirs (16) comprend un capteur (S5) destiné à détecter un portoir d'échantillons (56 sur la figure 6) et des moyens formant poussoirs destinés à pousser le portoir d'échantillons (56) pour l'écarter de la paroi (35) du dispositif de retrait afin qu'il soit plus difficile au portoir d'échantillons d'activer le capteur.
